(19) Europäisches Patentamt
European Patent Office
Office européen des brevets

(11) **EP 2 068 122 A2**

(12) **EUROPÄISCHE PATENTANMELDUNG**

(43) Veröffentlichungstag:
**10.06.2009   Patentblatt 2009/24**

(51) Int Cl.:
**G01C 21/34** *(2006.01)*

(21) Anmeldenummer: 08105547.7

(22) Anmeldetag: **10.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **03.12.2007   DE 102007058093**

(71) Anmelder: **Robert Bosch GmbH**
**70442 Stuttgart (DE)**

(72) Erfinder:
• **Vogt, Wilhelm**
  **33165 Lichtenau (DE)**
• **Mueller, Guido**
  **06484 Quedlinburg (DE)**
• **Varchmin, Axel**
  **31180 Giesen (DE)**
• **Kersken, Ulrich**
  **31199 Diekholzen (DE)**

(54) **Verfahren und Vorrichtung zum Ermitteln einer Routenempfehlung aus einer Mehrzahl von Wegstrecken**

(57)    Die vorliegende Erfindung betrifft ein Verfahren zum Ermitteln einer Routenempfehlung aus einer Mehrzahl von Wegstrecken (Strecke A, Strecke B) unter Verwendung eines zu optimierenden Parameters (t, R), der Auftretenswahrscheinlichkeiten der Größen oder Werte dieses Parameters und eines Optimierungsschwellwertes ($P_{min}$), wobei das Verfahren die folgenden Schritte umfasst:

- Bereitstellen (2) einer Wahrscheinlichkeitsdichte (p) für jede der Wegstrecken (Strecke A, Strecke B), in der die Auftretenswahrscheinlichkeiten der jeweiligen Größen oder Werte des zu optimierenden Parameters in den entsprechenden Wegstrecken (Strecke A, Strecke B) abgebildet sind;
- Aufintegrieren (4) jeder der Wahrscheinlichkeitsdichten, um je eine Verteilungsfunktion über den zu optimierenden Parameter pro Wegstrecke (Strecke A, Strecke B) zu erhalten;
- Bestimmen (6) je eines Optimierungsparameterwertes ($R_A(P_{min})$, $R_B(P_{min})$) für den zu optimierenden Parameter (t, R) bei jeder Verteilungsfunktion (P), bei dem der entsprechende Verteilungsfunktionswert den Optimierungsschwellwert ($P_{min}$) erreicht; und
- Ausgeben (8) derjenigen Wegstrecke (Strecke A) als Routenempfehlung, die den geringsten Optimierungsparameterwert ($R_A(P_{min})$) aufweist.

EP 2 068 122 A2

```
┌─────────────────────────────────────┐
│ Bereitstellen einer Wahrscheinlich-  │
│ keitsdichte für jede der Fahrstrecken,│── 2
│ in der die Auftretenswahrscheinlich- │
│ keit des zu optimierenden Parameters │
│ in den entsprechenden Fahrstrecken   │
│ abgebildet ist                       │
└─────────────────────────────────────┘
                  │
                  ▼
┌─────────────────────────────────────┐
│ Aufintegrieren jeder der             │
│ Wahrscheinlichkeitsdichten, um je    │── 4
│ eine Verteilungsfunktion über den    │
│ zu optimierenden Parameter pro       │
│ Fahrstrecken zu erhalten             │
└─────────────────────────────────────┘
                  │
                  ▼
┌─────────────────────────────────────┐
│ Bestimmen je eines Optimierungs-     │
│ parameterwertes für jede             │── 6
│ Verteilungsfunktion, bei dem der     │
│ entsprechende Verteilungsfunktions-  │
│ wert den Optimierungsschwellwert     │
│ erreicht                             │
└─────────────────────────────────────┘
                  │
                  ▼
┌─────────────────────────────────────┐
│ Ausgeben derjenigen Fahrstrecke als  │
│ Fahrtroutenempfehlung, die den       │── 8
│ geringsten                           │
│ Optimierungsparameterwert aufweist   │
└─────────────────────────────────────┘
```

**Fig. 3**

## Beschreibung

Technisches Gebiet

Die vorliegende Erfindung bezieht sich auf ein Verfahren zum Ermitteln einer Routenempfehlung gemäß Anspruch 1 sowie eine Vorrichtung zum Ermitteln einer Routenempfehlung gemäß Anspruch 9.

Stand der Technik

Herkömmliche Navigationssysteme bestimmen Routen, die auf einem besonders kurzen oder besonders schnellen Weg zu einem vorgegebenen Ziel führen. Auch die Bestimmung einer Route auf der Basis einer Mischung aus schnellster und kürzester Route ist bekannt. Ferner ist die Berücksichtigung weiterer Verkehrseigenschaften von Straßen zur Bestimmung von Routen bekannt. Diese weiteren Verkehrseigenschaften umfassen zum einen Daten über statische Verkehrseigenschaften, wie das Vorliegen von Maut-, Tunnel- oder Fährverbindungen, aber auch Daten über dynamische Verkehrseigenschaften, wie die aktuelle Verkehrslage oder andere verkehrsrelevante Meldungen.

Mit den aktuell bekannten Verfahren wird eine Route berechnet, in dem der relevante Parameter für die gefundene Route minimiert wird. Dabei wird davon ausgegangen, dass die Vergabe von Eigenschaften für alle Straßen von gleich hoher Beschreibungsqualität ist. Für einige Attribute, zum Beispiel Streckenlänge, mag das mit hoher Wahrscheinlichkeit zutreffen, für andere Attribute, zum Beispiel die mittlere Geschwindigkeit, jedoch nicht.

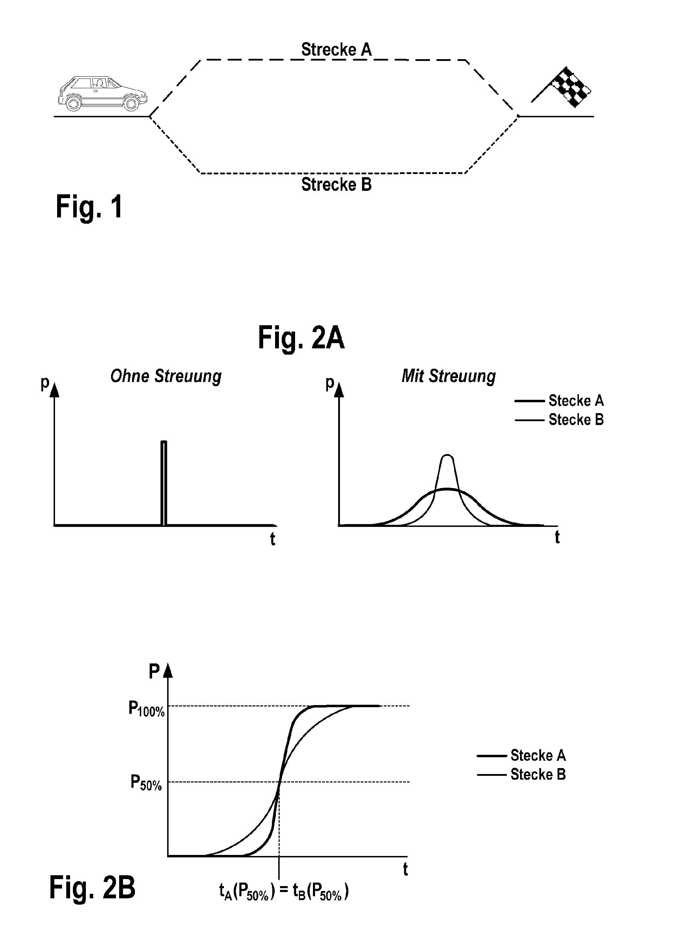

Am Beispiel der typischen Geschwindigkeit soll das daraus resultierende Problem verdeutlicht werden. Zur Vereinfachung der Beschreibung des Problems sind in Figur 1 lediglich zwei mögliche Strecken abgebildet, die als zu wählende Routen empfohlen werden können. Die Strecke A ist die etwas langsamere, die aber sehr genau klassifizierte Straßen enthält, und die Strecke B ist die geringfügig schnellere, die aber sehr ungenau klassifizierte Straßen enthält.

Wenn die Attribuierungsqualität (Attributierungsqualität) vernachlässigt wird, gewinnt immer die Strecke B als ermittelte Route (bzw. Routenempfehlung), da die "schnelleren" Straßen genutzt werden. Da die Attribuierungsqualität jedoch nicht berücksichtigt wird, ist somit nicht garantiert, dass erstens für die bestimmte Route (Strecke B) die Ankunftszeit tatsächlich eingehalten wird und zum anderen die bestimmte Route überhaupt das Optimum darstellt.

In der EP 1 061 491 B1 wird ein anderer Ansatz zur Bestimmung einer Fahrtroute vorgestellt. Hierbei werden an bestimmten Orten eines Straßenabschnittes Messdaten (wie die Fahrzeuggeschwindigkeit) aufgenommen und diese für die zwischen den Aufnahmepositionen liegenden Orte interpoliert. Diese Interpolation erfolgt durch das Überlagern einer Gewichtungsfunktion über die aufgenommenen Messdaten, so dass für jeden Ort eines Straßenabschnitts ein gemessenes oder interpoliertes Messdatum vorliegt. Allerdings garantiert die Ermittlung einer Fahrtroutenempfehlung unter Verwendung dieser Daten ebenfalls nicht, dass die Qualität und Zuverlässigkeit der aufgenommenen bzw. interpolierten Messdaten gleich hoch ist. Hierdurch können auch die tatsächlichen Fahrzeiten durchaus von den erwarteten Fahrzeiten für die gewählte Fahrstrecke abweichen und eine Fahrtroutenempfehlung ist dann lediglich von eingeschränkter Qualität in Bezug auf den zu optimierenden Parameter.

Die EP 1 159 586 B1 beschreibt ein Navigationssystem zum Bestimmen einer Route von einem Standort zu einem Zielort, bei dem die Bestimmung der Route auf einer Gewichtung einer Wegstrecke oder eines Streckenabschnitts basiert. Diese Gewichte sind zeitabhängig, so dass sich zum Beispiel für unterschiedliche Tageszeiten für einen Straßenabschnitt ein unterschiedliches Gewicht dieses Abschnittes bei der Routenbestimmung ergibt. Nachteilig erweist sich jedoch, dass sich eine solche Gewichtung schwierig an reale bzw. dynamische Veränderungen in dem Streckenabschnitt anpassen bzw. erweitern lässt und weiterhin keinen Hinweis auf die Qualität der Gewichte zulässt. Somit kann beispielsweise die tatsächliche Fahrzeit für die gewählte Route nicht sicher abgeschätzt werden, wenn für eine Strecke lediglich der mittlere Fahrgeschwindigkeitswert zu einer Tageszeit als einziger Wert für diese Strecke zu der entsprechenden Tageszeit bekannt ist.

Es ist daher die Aufgabe der vorliegenden Erfindung, eine Möglichkeit zur Verbesserung der Prognosequalität und der Zuverlässigkeit einer zu empfehlenden Route in Bezug auf einen Optimierungsparameter zu schaffen.

Offenbarung der Erfindung

Diese Aufgabe wird durch ein Verfahren mit den Schritten des Anspruchs 1 sowie durch eine Vorrichtung mit den Merkmalen des Anspruchs 9 gelöst. Weitere Ausführungsformen der Erfindung ergeben sich aus den abhängigen Patentansprüchen.

Die vorliegende Erfindung schafft ein Verfahren zum Ermitteln einer Routenempfehlung aus einer Mehrzahl von Wegstrecken unter Verwendung eines zu optimierenden Parameters und eines Optimierungsschwellwertes, das die folgenden Schritte umfasst:

- Bereitstellen einer Wahrscheinlichkeitsdichte für jede der Wegstrecken, in der die Auftretenswahrscheinlichkeiten der jeweiligen Größen oder Werte des zu optimierenden Parameters in den entsprechenden Wegstrecken abgebildet sind;

- Aufintegrieren jeder der Wahrscheinlichkeitsdichten, um je eine Verteilungsfunktion über den zu optimierenden Parameter pro Wegstrecke zu erhalten;

- Bestimmen je eines Optimierungsparameterwertes für jede Verteilungsfunktion, bei dem der entsprechende Verteilungsfunktionswert den Optimierungsschwellwert erreicht; und

- Ausgeben derjenigen Wegstrecke als Routenempfehlung, die den geringsten Optimierungsparameterwert aufweist.

Die vorliegende Erfindung basiert auf der Erkenntnis, dass durch die Verwendung der Wahrscheinlichkeitsdichte der Auftretenswahrscheinlichkeit der jeweiligen Größen oder Werte des zu optimierenden Parameters eine Information über die Güte oder Aussagekraft dieses Parameters mitberücksichtigt wird. Über die Streuung des zu optimierenden Parameters kann dann beispielsweise erkannt werden, dass eine Wegstrecke trotz der geringeren tatsächlichen Fahrzeit (bzw. Gehzeit) nicht mit Sicherheit auch in der kürzesten Zeit zu durchfahren ist. Dies gilt insbesondere dann, wenn die Fahrtdauer (Gehdauer) der "schnellsten" Wegstrecke eine wesentlich breitere Streuungscharakteristik aufweist. In diesem Fall liefert zwar die gemittelte Fahrzeit für die "schnellste" Wegstrecke die geringste Fahrzeit für alle zur Auswahl stehenden Wegstrecken, jedoch besteht auch eine erhebliche Wahrscheinlichkeit dafür, dass die tatsächliche Fahrzeit für die ermittelte "schnellste" Wegstrecke deutlich länger sein kann als die gemittelte Fahrzeit. Durch die Berücksichtigung der Streuungscharakteristik eines zu optimierenden Parameters (wie der Fahrzeit, der durch die Routenwahl verursachten Kosten, Umweltbelastung, der Fahrerbelastung, Stress oder des zu erwartenden Kraftstoffverbrauchs) kann die Zuverlässigkeit der Einhaltung eines Wertes des zu optimierenden Parameters deutlich gesteigert werden, wenn die empfohlene Route auch tatsächlich gewählt wird.

Der Vorteil der vorliegenden Erfindung besteht somit darin, dass dem Fahrer eines Fahrzeugs bzw. einem Fußgänger gegenüber herkömmlichen Ansätzen eine deutlich zuverlässigere Routenempfehlung in Bezug auf den zu optimierenden Parameter (wie die Fahrzeit bzw. Gehzeit, die durch die Routenwahl verursachten Kosten oder den zu erwartenden Kraftstoffverbrauch) gegeben werden kann.

Gemäß einer Ausführungsform der vorliegenden Erfindung kann bei einem Verfahren, bei dem sich zumindest eine Fahrstrecke aus einer Mehrzahl von Teilwegstrecken zusammensetzt, der Schritt des Bereitstellens der Wahrscheinlichkeitsdichte ein Bereitstellen von je einer Teilwegstreckenwahrscheinlichkeit für jede der Teilwegstrecken umfassen. In diesen Teilwegstreckenwahrscheinlichkeiten ist die Auftretenswahrscheinlichkeit der jeweiligen Größen bzw. Werte des zu optimierenden Parameters in den entsprechenden Teilwegstrecken abgebildet. Ferner schließt der Schritt des Bereitstellens der Wahrscheinlichkeitsdichte auch ein mathematisches Zusammenfassen der Teilwegstreckenwahrscheinlichkeiten ein, um die zuvor genannte Wahrscheinlichkeitsdichte für die Wegstrecke zu erhalten. Hierdurch können Wegstrecken, die aus mehreren Teilwegstrecken bestehen, zusammen optimiert werden, so dass sich für die Gesamtstrecke eine zuverlässigere und sicherere Aussage über den zu erwartenden Parameter machen lässt. Zugleich erfordert diese Vorgehensweise lediglich einfache und somit numerisch leicht und unaufwändig zu realisierende Strukturen, die eine kostengünstige Implementierung dieser Ausführungsform ermöglichen.

In einer weiteren Ausführungsform kann das Verfahren ferner einen Schritt des Ausgebens des Optimierungsparameterwertes derjenigen Wegstrecke umfassen, die als Routenempfehlung ausgegeben wurde. Dies ermöglicht nicht nur eine Information des Fahrers über die optimale Wegstrecke, sondern auch einen Hinweis, welche konkrete Ausprägung des zu optimierenden Parameters durch den Optimierungsparameterwert erreicht worden ist. Eine derartige Ausgabe erhöht somit den Komfort für den Fahrer.

Insbesondere kann der zu optimierende Parameter in einer Fahrzeit, einer Streckenlänge, einem Energie- bzw. Kraftstoffverbrauch, einer Umweltbelastung, einer Fahrerbelastung, Stress und/oder in Kosten für die gewählte Route bestehen. Dies bietet den Vorteil, dass die Optimierung auf verschiedene Parameter ausgedehnt werden kann. Ferner ist es auch denkbar, dass die Optimierung vor der Festlegung auf eine als Routenempfehlung auszugebende Wegstrecke für mehrere Parameter durchgeführt wird, wobei dann die Entscheidung für die endgültige Wegstreckenauswahl durch eine Kombination oder Gewichtung der einzelnen Optimierungsergebnisse zu erfolgen hat. Beispielsweise kann diejenige Wegstrecke als Routenempfehlung ausgegeben werden, für die zwei Optimierungsparameter die geringste Ausprägung gegenüber den entsprechenden Optimierungsparametern der anderen Wegstrecken aufweisen.

Gemäß einer weiteren Ausführungsform kann im Schritt des Bestimmens der Optimierungsparameterwerte dieser derart bestimmt werden, dass über Wahrscheinlichkeiten der zu optimierenden Parameter integriert wird, deren Wahrscheinlichkeiten kleiner oder gleich dem Optimierungsschwellwert sind. Dies stellt die gewünschte Funktion sicher, eine zuverlässige Routenempfehlung auszugeben. Dabei kann der Optimierungsschwellwert entsprechend den Wünschen eines Bedieners über eine Eingabeeinheit eingestellt werden. Somit kann das vorgeschlagene Verfahren nicht nur mit festen Schwellwerten ausgeführt werden, sondern sich der Optimierungsschwellwert auch adaptiv und für jeden Einsatz einzeln einstellen lassen.

In einer weiteren Ausführungsform kann das Verfahren einen Schritt des Ermittelns der aktuellen Position eines Fahrzeugs in der Wegstrecke umfassen und nachfolgend das Verfahren unter Verwendung der ermittelten aktuellen Position des Fahrzeugs rekursiv wiederholen. Dies ermöglicht bei einer Änderung der Verkehrssituation, beispielsweise durch einen Unfall, dass die ausgegebene Routenempfehlung überarbeitet wird. Insbesondere bei einer Kopplung des vorgeschlagenen Verfahrens mit einer über Rundfunk ausgestrahlten Verkehrsinformation, kann während der Fahrt eine evtl. gesperrte Straße aus der Ermittlung der Routenempfehlung herausgenommen werden, wodurch eine Neubewertung bzw. - festlegung der Empfehlung für die verbleibende Wegstrecke bis zum Zielort möglich wird.

Günstig ist es auch, wenn der Schritt des Bereitstellens einer Wahrscheinlichkeitsdichte das Bereitstellen der Wahrscheinlichkeitsdichte des zu optimierenden Parameters aus einer zuvor eingelesenen Straßenkarte umfasst. Alternativ oder zugleich kann das Bereitstellen der Wahrscheinlichkeitsdichte des zu optimierenden Parameters auch aus vom Fahrzeug oder vom Anwender erfassten und abgespeicherten Daten des zu optimierenden Parameters zur entsprechenden Wegstrecke erfolgen. Dies ermöglicht, dass neben den allgemein verfügbaren Daten, die von einem Serviceprovider zur Verfügung gestellt werden, auch spezifische Wahrscheinlichkeitsdaten für die entsprechende Wegstrecke vom Benutzer aufgenommen und abgespeichert werden können. Diese Daten können zur Verbesserung der Wahrscheinlichkeitsdichte auf vom Benutzer häufig befahrenen Strecken eingesetzt werden, so dass sich auf diesen Strecken eine noch bessere Zuverlässigkeit der Routenempfehlung realisieren lässt.

Vorteilhaft ist es auch, ein Computerprogramm mit Programmcode zur Durchführung des vorstehend genannten Verfahrens in einer seiner Ausführungsformen vorzusehen, wobei das Verfahren dann ausgeführt wird, wenn das Computerprogramm auf einem Computer abläuft. Dieser Ansatz lässt eine einfache und zugleich effektive Umsetzung der Erfindung zu.

In einer weiteren Ausführungsform ist eine Vorrichtung zum Ermitteln einer Routenempfehlung aus einer Mehrzahl von Wegstrecken unter Verwendung eines zu optimierenden Parameters und eines Optimierungsschwellwertes vorgesehen, wobei die Vorrichtung die folgenden Merkmale aufweist:

- eine Einheit zum Bereitstellen einer Wahrscheinlichkeitsdichte für jede der Wegstrecken, in der die Auftretenswahrscheinlichkeit der jeweiligen Größen bzw. Werte des zu optimierenden Parameters in den entsprechenden Wegstrecken abgebildet ist;

- eine Einheit zum Aufintegrieren jeder der Wahrscheinlichkeitsdichten, um je eine Verteilungsfunktion über den zu optimierenden Parameter pro Wegstrecke zu erhalten;

- eine Einheit zum Bestimmen je eines Optimierungsparameterwertes für jede Verteilungsfunktion, bei dem der entsprechende Verteilungsfunktionswert den Optimierungsschwellwert erreicht; und

- eine Ausgabeeinheit für diejenige Wegstrecke als Routenempfehlung, die den geringsten Optimierungsparameterwert aufweist.

Kurze Beschreibung der Zeichnungen

Die Erfindung wird nachstehend anhand der beigefügten Zeichnungen beispielhaft näher erläutert. Es zeigen:

Fig. 1 eine Darstellung, die zwei zur Auswahl stehende Wegstrecken darstellt, von denen eine für eine Routenempfehlung auszuwählen ist;

Fig. 2A zwei Diagramme, die je eine Wahrscheinlichkeitsdichte für eine mittlere Fahrzeit unter Berücksichtigung einer Streuung bzw. ohne Streuung abbilden;

Fig. 2B ein Diagramm, das eine Verteilungsfunktion der Fahrzeit zweier Strecken abbildet;

Fig. 2C ein Diagramm, das zwei Wahrscheinlichkeitsdichten von Widerständen zweier Strecken darstellt;

Fig. 2D ein Diagramm, das zwei Verteilungsfunktionen des Widerstandes für je eine Strecke darstellt, wobei die Verteilungsfunktionen auf den in Fig. 2C dargestellten Wahrscheinlichkeitsdichtefunktionen basiert;

Fig. 3 ein Ablaufdiagramm eines Verfahrens gemäß einem Ausführungsbeispiel der vorliegenden Erfindung; und

Fig. 4 ein Blockschaltbild einer Vorrichtung gemäß einem Ausführungsbeispiel der vorliegenden Erfindung.

Ausführungsformen der Erfindung

Wie bereits zuvor angesprochen, zeigt Fig. 1 eine Ausgangssituation zur Auswahl einer Wegstrecke aus zwei zur Verfügung stehenden Strecken (Strecke A und Strecke B), bei denen eine der Wegstrecken als Routenempfehlung ausgewählt wird. Die im Folgenden näher beschriebene Erfindung berücksichtigt dabei neben der Straßeneigenschaft an sich (wie der Bestimmung der kürzesten Fahrzeit) auch die Attribuierungsqualität der entsprechenden Straßeneigenschaft bei der Routenberechnung. Die Qualität der Attribuierung lässt sich durch die Streuung bzw. durch die Wahrscheinlichkeitsdichte eines Attributs beschreiben. Es wird dabei diejenige Strecke als Route bestimmt, welche den geringsten Widerstandswert aufweist, auch unter Berücksichtigung der Attribuierungsqualität. Ein Widerstandswert wird in diesem Zusammenhang als ein Parameter verstanden, der zu optimieren ist und der als Kriterium für die Auswahl einer Wegstrecke als Routenempfehlung dient.

Der Kern dieser Erfindung besteht im Wesentlichen darin, dass nicht nur die Eigenschaften der Straße an sich, sondern auch die Attribuierungsqualität dieser Information bei der Routenoptimierung berücksichtigt wird. Somit steht nicht mehr allein das Minimum des durch das Routenkriterium beschriebenen Wertes im Vordergrund sondern auch dessen Streuung.

Beim Optimierungskriterium "Zeit" wird demzufolge nicht mehr ausschließlich die schnellste Route, sondern diejenige Route bestimmt, mit der das Ziel sowohl schnell aber auch möglichst genau zur prognostizierten Zeit erreicht wird.

Dieser Ansatz lässt sich auf unterschiedlichste Optimierungskriterien, wie z.B. Zeit, Kraftstoffsverbrauch oder Kosten anwenden, so dass sich insbesondere die folgenden Vorteile ergeben:

- eine höhere Verlässlichkeit der prognostizierten Fahrtzeit und damit eine genauer bestimmbare Ankunftszeit;
- eine genauere Prognose des Kraftstoffverbrauchs; oder
- eine genauere Prognose der Kosten für die Route.

Bei einer Prognose des Kraftstoffverbrauchs ist dem die Routenempfehlung ermittelnden System eine Information über den Kraftstoffverbrauch des Fahrzeugs auf den zu befahrenden Strecken zu geben. Analoges gilt auch für Informationen über die durch die Fahrt auf der entsprechenden Strecke entstehenden Kosten wie beispielsweise Sprit- oder Mautkosten, die ebenfalls für jede Wegstrecke dem genannten System zuzuführen sind. Die Kosten für die jeweiligen Wegstrecken können sich auch aus einer Höhe der Spritkosten und einem Spritverbrauch ergeben, so dass das die Routenempfehlung ermittelnde System, die Kosten für die Wegstrecke selbst errechnen kann.

Die Berücksichtigung der Streuung ist mit den verschiedenen Routenberechnungsverfahren, wie Ford-Moore, Dijkstra oder A* anwendbar, wobei die Optimierungsrichtung, vom Ziel zum Start oder umgekehrt, unerheblich ist.

Allen Verfahren ist gemein, dass die zu optimierende Eigenschaft möglichst durch einen abstrakten Widerstand abgebildet wird, den es zu minimieren gilt. So entspricht der Widerstand bei "kurzer Route" der Streckenlänge und bei "schneller Route" der Fahrtzeit, die sich wiederum aus der Wegstrecke und der typischen mittleren Geschwindigkeit ergibt.

Zwei verschiedene Strecken mit im Mittel identischer Fahrtzeit können zum Beispiel hinsichtlich der Tages-, Wochen- oder Jahreszeiten sehr unterschiedliche Fahrzeiten annehmen. Diese Streuung lässt sich durch die Wahrscheinlichkeitsdichte der mittleren Fahrzeit bzw. Geschwindigkeit beschreiben.

Die in den Diagrammen aus Fig. 2A dargestellten Strecken weisen zwar eine gleiche mittlere Fahrzeit auf, jedoch ist die Attribuierungsqualität der Strecke A (dunkle Linie im rechten Diagramm "mit Streuung") höher als die Attribuierungsqualität der Strecke B (Linie mit Kreisen im rechten Diagramm "mit Streuung"). Wird dagegen die Streuung nicht berücksichtigt (wie dies im linken Diagramm "ohne Streuung" in Fig. 2A dargestellt ist), ergeben sich für die beiden Strecken A und B die gleichen mittleren Fahrzeiten, obwohl die tatsächlichen Fahrzeiten durchaus variieren können. Auf der Basis des rechten Diagramms "mit Streuung" aus Fig. 2A, bei dem die mittleren Fahrzeiten für die Strecke A und B gleich lang sind, wird durch Integration eine Verteilungsfunktion P für die beiden Wahrscheinlichkeitsdichtefunktionen p erhalten, wie sie in Fig. 2B dargestellt ist. Dass die beiden Wahrscheinlichkeitsdichtefunktionen p den gleichen Mittelwert haben, ist in dem Diagramm aus Fig. 2B daran zu erkennen, dass sich die beiden Verteilungsfunktionen bei einer Wahrscheinlichkeit von 50% (d.h. $P_{50\%}$) schneiden und somit auch einen gleichen Parameterwert (d.h. $t_A(P_{50\%})$ = $t_B(P_{500\%})$) aufweisen. Aus dem Diagramm aus Fig. 2B wird ferner ersichtlich, dass bei einer vorgegebenen Mindestwahrscheinlichkeit von mehr als 50% (über alle betrachteten Fahrzeiten) die Wahl der Strecke A eine schnellere Route liefert, als die Strecke B. Dies kann aus Fig. 2B daran erkannt werden, dass für Wahrscheinlichkeiten von $P > P_{50\%}$ ein Zusammenhang von $t_A(P) < t_B(P)$ gilt, was somit für eine identische Wahrscheinlichkeit P (z.B. der vorgegebenen Mindestwahrscheinlichkeit $P_{min}$) der Verteilungsfunktion auf beiden Strecken eine kürzere zu erwartende Fahrzeit für Strecke A ergibt. Für das Erreichen des Ziels bei einer Mindestwahrscheinlichkeit für den zu optimierenden Parameter von größer als 50% bedeutet das, dass eine schnellere Route über die Strecke A und nicht über die Strecke B führt. Dies ist im Wesentlichen durch die breitere Streuung der Wahrscheinlichkeitsdichte p für Strecke B gegenüber der schmaleren Streuung der Wahrscheinlichkeitsdichte p der Strecke A begründet.

Bei der herkömmlichen Routenberechnung werden zwei mögliche Streckenalternativen nur hinsichtlich ihres Widerstands miteinander verglichen und es wird entsprechend Gleichung 1 diejenige Strecke mit dem geringeren mittleren Widerstand als Routenempfehlung bestimmt. Der Verteilungsfunktionswert $R_x(P_{50\%})$ wird in diesem Fall als der allein zu verwendende Mittelwert des Widerstandes (d.h. ohne Streuung) für die Strecke x betrachtet. Die Variable x kennzeichnet dabei je eine der zur Auswahl stehenden Strecken bzw. Routen.

$$\text{Route} \Leftarrow \text{Min}(R_x(P_{50\%})) \qquad x \approx \text{über alle Routen} \qquad \text{Gleichung 1}$$

Zur zusätzlichen Berücksichtigung der Wahrscheinlichkeitsfunktion ist die Widerstandsoptimierung hinsichtlich des Widerstandsvergleichs anzupassen. So reicht es nicht mehr den (mittleren) Widerstand der beiden Strecken miteinander zu vergleichen. Stattdessen müssen die Verteilungsfunktionen des Widerstands der beiden Strecken miteinander verglichen werden. Als Auswahlkriterium dient dabei eine vorgegebene Mindestwahrscheinlichkeit und es wird diejenige Strecke als Routenempfehlung verwendet, deren Widerstand R für diese Mindestwahrscheinlichkeit $P_{min}$ am Geringsten ist. Vorzugsweise sollte $P_{min}$ größer als 50% sein. Dieser Zusammenhang ist in Gleichung 2 wiedergegeben.

$$\text{Route} \Leftarrow \text{Min}(R_x(P_{min})) \qquad x \approx \text{über alle Routen} \qquad \text{Gleichung 2}$$

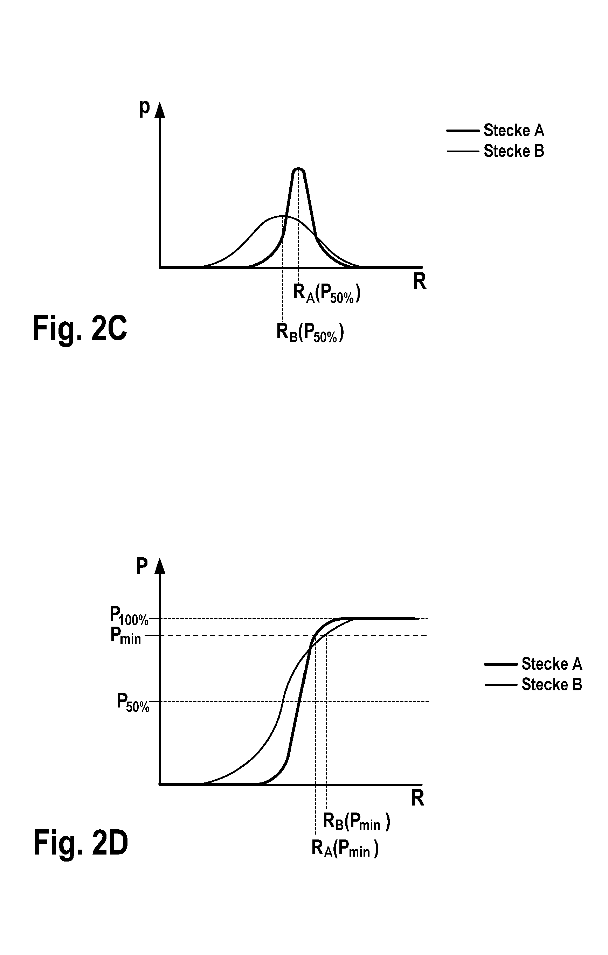

Für das in Fig. 2C dargestellte Beispiel gilt, dass die Strecke B gegenüber Strecke A eine geringere mittlere Fahrzeit aufweist (d.h. $R_A(P_{50\%}) > R_B(P_{50\%})$). Jedoch hat die Strecke B eine größere Streuung der typischen Fahrzeit. Im Vergleich der Verteilungsfunktion, die in Fig. 2D dargestellt ist, schlägt sich das in der Form nieder, dass zwar der mittlere Widerstand $R_B(P_{50\%})$ der Strecke B geringer ist als der mittlere Widerstand $R_A(P_{50\%})$ der Strecke A, jedoch der Widerstand R für die Mindestwahrscheinlichkeit der Strecke A (d.h. $R_A(P_{min})$) kleiner ist, als der Widerstand R für die Mindestwahrscheinlichkeit der Strecke B (d.h. $R_B(P_{min})$). Entsprechend des hier vorgestellten Verfahrens wird dann die Strecke A als Routenempfehlung gewählt, welche zwar nicht die schnellste, dafür aber die Route mit der sichereren Ankunftszeit ist.

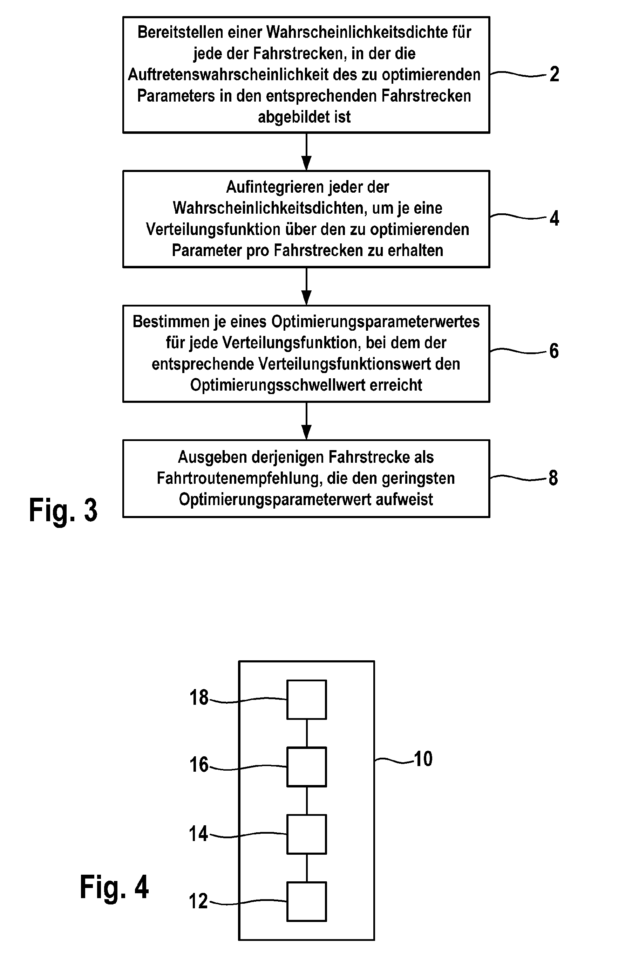

Die konkrete Umsetzung des erfindungsgemäßen Ansatzes ist aus Fig. 3 zu entnehmen, in der ein Ablaufdiagramm eines Ausführungsbeispiels des erfindungsgemäßen Verfahrens dargestellt ist. In einem ersten Schritt 2 erfolgt ein Bereitstellen einer Wahrscheinlichkeitsdichte p für jede der Wegstrecken (d.h. Strecke A oder Strecke B), in der die Auftretenswahrscheinlichkeit der jeweiligen Größen bzw. Werte des zu optimierenden Parameters (d.h. t oder R) in den entsprechenden Wegstrecken (d.h. Strecken A oder B) abgebildet ist. Daran anschließend erfolgt in einem zweiten Schritt 4 ein Aufintegrieren jeder der Wahrscheinlichkeitsdichten p, um je eine Verteilungsfunktion P über den zu optimierenden Parameter pro Wegstrecke zu erhalten. Weiterhin erfolgt in einem nachfolgenden Schritt 6 ein Bestimmen je eines Optimierungsparameterwertes (z.B. $R_A(P_{min})$ oder $R_B(P_{min})$) aus dem zu optimierenden Parameterwertebereich für jede Verteilungsfunktion P, bei dem der entsprechende Verteilungsfunktionswert den Optimierungsschwellwert $P_{min}$ erreicht. Letztlich erfolgt in einem abschließenden Schritt 8 ein Ausgeben derjenigen Wegstrecke als Routenempfehlung, die den geringsten Optimierungsparameterwert ($R_A(P_{min})$ oder $R_B(P_{min})$) aufweist. Auch kann das Verfahren für eine Strecke mit mehreren Teilstrecken angewandt werden. Dabei sind dann lediglich die Wahrscheinlichkeitsdichten für die einzelnen Teilstrecken mathematisch zusammen zu fassen (z.B. durch Aufsummieren, Faltung und dergleichen), um die Verteilungsfunktion für die entsprechende Gesamtstrecke zu bilden. Mit der erhaltenen Verteilungsfunktion kann dann der Schritt des Bestimmens des Optimierungsparameterwertes analog zu Schritt 6 erfolgen.

Das vorgeschlagene Verfahren kann zusätzlich zu bestehenden Routenoptimierungskriterien, wie zum Beispiel "schnelle Route", "Route mit minimalem Kraftstoffverbrauch" oder "kostengünstigste Route", angewandt werden. Hierzu könnte beispielsweise im HMI (HMI = Human-Machine-Interface = Mensch-Maschine-Schnittstelle) oder MMI (MMI = Man-Machine-Interface = Mensch-Maschine-Schnittstelle) eine Konfigurationsmöglichkeit durch einen entsprechenden Schalter in den Einstellungen realisiert werden.

Bei der statistischen Bestimmung von mittleren Geschwindigkeiten für bestimmte Streckenabschnitte fallen die eine Wahrscheinlichkeit beschreibenden Parameter bereits bei der Datenaufnahme an. Die statistischen Daten können dabei sowohl durch einen globalen Datenpool historischer Werte bereitgestellt werden, oder aber durch ein Fahrzeug während der Fahrt ermittelt werden. Sie können somit als Bestandteil der Rohdaten und damit auch in den Navigationsdaten zur Verfügung stehen, so dass sie wiederum durch das vorstehend vorgeschlagene Routenberechnungsverfahren verwendet werden können.

Bei der Verwendung dieser Qualitätsdaten mit diesen Verfahren wird dann nicht mehr die Route berechnet, welche ausschließlich hinsichtlich des zu optimierenden Parameters optimal ist, sondern eine andere Route, welche eine höhere Genauigkeit der Vorhersage für die Fahrt- bzw. Ankunftszeit, den Kraftstoffverbrauch oder ähnliches hat. Insbesondere bei der Verwendung von Qualitätsdaten, die vom Fahrzeug selbst aufgenommen werden, können sich bei unterschiedlichem Fahrverhalten verschiedene Routenempfehlungen ergeben.

Schließlich zeigt Fig. 4 ein Blockschaltbild eines Ausführungsbeispiels einer erfindungsgemäßen Vorrichtung 10 zum Ermitteln einer Routenempfehlung aus einer Mehrzahl von Wegstrecken. Die Vorrichtung 10 umfasst eine Einheit 12 zum Bereitstellen einer Wahrscheinlichkeitsdichte für jede der Wegstrecken. Dieses Bereitstellen kann beispielsweise aus historischen Informationen eines Datenpools erfolgen, die für einen Streckenabschnitt der Route in einer digitalen Straßenkarte abgespeichert sind. Alternativ oder zusätzlich können auch Datenwerte für einen Streckenabschnitt erfasst und zur Verbesserung der Information aus dem Datenpool verwendet werden. Weiterhin umfasst die Vorrichtung 10 eine Einheit 14 zum Aufintegrieren jeder der Wahrscheinlichkeitsdichten, um je eine Verteilungsfunktion über den zu optimierenden Parameter pro Wegstrecke zu erhalten. Die Einheit 14 zum Aufintegrieren ist dabei mit der Einheit 12 zum Bereitstellen verbunden. Zusätzlich umfasst die Vorrichtung 10 eine mit der Einheit 14 zum Aufintegrieren verbundene Einheit 16 zum Bestimmen je eines Optimierungsparameterwertes für den zu optimierenden Parameter bei jeder Verteilungsfunktion, bei dem der entsprechende Verteilungsfunktionswert den Optimierungsschwellwert erreicht. Schließlich weist die Vorrichtung 10 eine mit der Einheit 16 zum Bestimmen verbundene Ausgabeeinheit 18 auf, um diejenige Wegstrecke als Routenempfehlung auszugeben, für die der geringste Optimierungsparameterwert ermittelt wurde.

Obwohl die obigen Ausführungsformen der Erfindung in Verbindung mit der Bewegung eines Kraftfahrzeugs in einem Streckennetz beschrieben worden ist, ist das erfindungsgemäße Verfahren ohne weiteres auf Bewegung eines Fußgängers, Fahrradfahrers usw. übertragbar. Der Begriff Fahrzeit ist daher allgemein als die Zeit zu verstehen, die für die Bewegung von einem Ende der Wegstrecke zur Nächsten erforderlich ist.

Weiterhin kann Routenempfehlung auch für virtuelle Streckennetze gegeben werden, wenn das Streckennetz lediglich virtuell auf einer Datenverarbeitungseinheit abgebildet ist, wie z.B. bei einem virtuellen Lebensraum, wie es beispielsweise von SecondLife ® bereitgestellt wird.

## Patentansprüche

1. Verfahren zum Ermitteln einer Routenempfehlung aus einer Mehrzahl von Wegstrecken (Strecke A, Strecke B) unter Verwendung eines zu optimierenden Parameters (t, R), der Auftretenswahrscheinlichkeiten der Größen oder Werte dieses Parameters und eines Optimierungsschwellwertes ($P_{min}$), wobei das Verfahren die folgenden Schritte umfasst:

   - Bereitstellen (2) einer Wahrscheinlichkeitsdichte (p) für jede der Wegstrecken (Strecke A, Strecke B), in der die Auftretenswahrscheinlichkeiten der jeweiligen Größe bzw. Wertes des zu optimierenden Parameters in den entsprechenden Wegstrecken (Strecke A, Strecke B) abgebildet sind;
   - Aufintegrieren (4) jeder der Wahrscheinlichkeitsdichten, um je eine Verteilungsfunktion über den zu optimierenden Parameter pro Wegstrecke (Strecke A, Strecke B) zu erhalten;
   - Bestimmen (6) je eines Optimierungsparameterwertes ($R_A(P_{min})$, $R_B(P_{min})$) für jede Verteilungsfunktion (P), bei dem der entsprechende Verteilungsfunktionswert den Optimierungsschwellwert ($P_{min}$) erreicht; und
   - Bereitstellen (8) derjenigen Wegstrecke (Strecke A) als Routenempfehlung, die den geringsten Optimierungsparameterwert ($RA(P_{min})$) aufweist.

2. Verfahren nach Anspruch 1, wobei sich zumindest eine Wegstrecke aus einer Mehrzahl von Teilwegstrecken zusammensetzt, **dadurch gekennzeichnet, dass** der Schritt des Bereitstellens (2) der Wahrscheinlichkeitsdichte

   - ein Bereitstellen von je einer Teilwahrscheinlichkeitsdichte für jede der Teilwegstrecken umfasst, in denen die Auftretenswahrscheinlichkeit des zu optimierenden Parameters (R) in den entsprechenden Teilwegstrecken abgebildet ist und
   - der Schritt des Bereitstellens der Wahrscheinlichkeitsdichte ferner ein mathematisches Zusammenfassen der Teilwahrscheinlichkeitsdichten umfasst, um die Wahrscheinlichkeitsdichte für die entsprechende Wegstrecke zu erhalten.

3. Verfahren gemäß Anspruch 1 oder 2**, dadurch gekennzeichnet, dass** das Verfahren ferner einen Schritt des Ausgebens des Optimierungsparameterwertes ($R_A(P_{min})$, $R_B(P_{min})$) derjenigen Wegstrecke umfasst, die als Routenempfehlung ausgegeben wurde.

4. Verfahren gemäß einem der Ansprüche 1 bis 3, **dadurch gekennzeichnet, dass** der zu optimierende Parameter (t, R) in einer Fahrzeit (t), einer Streckenlänge, einem Energieverbrauch, einer Umweltbelastung, einer Fahrerbelastung, Stress oder in Kosten für die gewählte Routenempfehlung besteht oder in einer Kombination mehrerer dieser Parameter besteht.

**5.** Verfahren gemäß einem der Ansprüche 1 bis 4, **dadurch gekennzeichnet, dass** im Schritt des Bestimmens (6) der Optimierungsparameterwerte ein Optimierungsparameterwert (RA($P_{min}$)) derart bestimmt wird, dass über Wahrscheinlichkeiten des zu optimierenden Parameters (t, R) integriert wird, deren Wahrscheinlichkeiten (P) kleiner oder gleich dem Optimierungsschwellwert ($P_{min}$) sind.

**6.** Verfahren gemäß einem der Ansprüche 1 bis 5, **dadurch gekennzeichnet, dass** es einen Schritt des Ermittelns der aktuellen Position eines Fahrzeugs in der als Routenempfehlung ausgegebenen Wegstrecke (Strecke A, Strecke B) umfasst und nachfolgend das Verfahren unter Verwendung der ermittelten aktuellen Position des Fahrzeugs wiederholt.

**7.** Verfahren gemäß einem der Ansprüche 1 bis 6, **dadurch gekennzeichnet, dass** der Schritt des Bereitstellens (2) einer Wahrscheinlichkeitsdichte das Bereitstellen der Wahrscheinlichkeitsdichte des zu optimierenden Parameters aus einer zuvor eingelesenen Straßenkarte und/oder das Bereitstellen der Wahrscheinlichkeitsdichte des zu optimierenden Parameters aus vom Fahrzeug oder vom Anwender erfassten und abgespeicherten Daten des zu optimierenden Parameters (R) zur entsprechenden Wegstrecke (Strecke A, Strecke B) umfasst.

**8.** Computerprogramm mit Programmcode zur Durchführung des Verfahrens nach einem der Ansprüche 1 bis 7, wenn das Computerprogramm auf einem Computer ausgeführt wird.

**9.** Vorrichtung (10) zum Ermitteln einer Routenempfehlung aus einer Mehrzahl von Wegstrecken (Strecke A, Strecke B) unter Verwendung eines zu optimierenden Parameters (t, R), der Auftretenswahrscheinlichkeiten der Größen oder Werte dieses Parameters und eines Optimierungsschwellwertes ($P_{min}$), wobei die Vorrichtung (10) die folgenden Merkmale aufweist:

- eine Einheit (12) zum Bereitstellen einer Wahrscheinlichkeitsdichte (p) für jede der Wegstrecken (Strecke A, Strecke B), in der die Auftretenswahrscheinlichkeiten der jeweiligen Größen oder Werte des zu optimierenden Parameters (t, R) in den entsprechenden Wegstrecken (Strecke A, Strecke B) abgebildet sind;
- eine Einheit (14) zum Aufintegrieren jeder der Wahrscheinlichkeitsdichten (p), um je eine Verteilungsfunktion (P) über den zu optimierenden Parameter (t, R) pro Wegstrecke (Strecke A, Strecke B) zu erhalten;
- eine Einheit (16) zum Bestimmen je eines Optimierungsparameterwertes ($R_A$($P_{min}$), $R_B$($P_{min}$)) für jede Verteilungsfunktion (P), bei dem der entsprechende Verteilungsfunktionswert den Optimierungsschwellwert ($P_{min}$) erreicht; und
- eine Ausgabeeinheit (18) für diejenige Wegstrecke (Strecke A) als Routenempfehlung, die den geringsten Optimierungsparameterwert ($R_A$($P_{min}$)) aufweist.

**Fig. 1**

**Fig. 2A**

*Ohne Streuung*

*Mit Streuung*

—— Stecke A
—— Stecke B

—— Stecke A
—— Stecke B

**Fig. 2B**

$t_A(P_{50\%}) = t_B(P_{50\%})$

p ↑

Stecke A
Stecke B

$R_A(P_{50\%})$

$R_B(P_{50\%})$

**Fig. 2C**

P ↑

$P_{100\%}$
$P_{min}$

$P_{50\%}$

Stecke A
Stecke B

R

$R_B(P_{min})$

$R_A(P_{min})$

**Fig. 2D**

Bereitstellen einer Wahrscheinlichkeitsdichte für jede der Fahrstrecken, in der die Auftretenswahrscheinlichkeit des zu optimierenden Parameters in den entsprechenden Fahrstrecken abgebildet ist —2

Aufintegrieren jeder der Wahrscheinlichkeitsdichten, um je eine Verteilungsfunktion über den zu optimierenden Parameter pro Fahrstrecken zu erhalten —4

Bestimmen je eines Optimierungsparameterwertes für jede Verteilungsfunktion, bei dem der entsprechende Verteilungsfunktionswert den Optimierungsschwellwert erreicht —6

Ausgeben derjenigen Fahrstrecke als Fahrtroutenempfehlung, die den geringsten Optimierungsparameterwert aufweist —8

**Fig. 3**

**Fig. 4**

18 16 14 12 —10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1061491 B1
- EP 1159586 B1